# EUROPÄISCHE PATENTSCHRIFT

(11) **EP 3 793 854 B1**
(45) Veröffentlichungstag und Bekanntmachung des Hinweises auf die Patenterteilung: **02.07.2025**
(21) Anmeldenummer: 19725084.8
(22) Anmeldetag: 15.05.2019
(51) Int. Cl.: B60W 50/02, B60W 50/038, B60W 50/029, B60K 28/06, B60W 30/10, B60W 30/14, B60W 40/08, B60W 50/00, G06V 20/59, G06V 40/10, G06V 40/16, G06V 40/18

(54) **VERFAHREN, VORRICHTUNG UND SYSTEM ZUM BEEINFLUSSEN ZUMINDEST EINES FAHRASSISTENZSYSTEMS EINES KRAFTFAHRZEUGS**
METHOD, DEVICE, AND SYSTEM FOR INFLUENCING AT LEAST ONE DRIVER ASSISTANCE SYSTEM OF A MOTOR VEHICLE
PROCÉDÉ, DISPOSITIF ET SYSTÈME POUR INFLUENCER AU MOINS UN SYSTÈME D'AIDE A LA CONDUITE D'UN VÉHICULE AUTOMOBILE

(30) Priorität: 15.05.2018 DE 102018111596
(43) Veröffentlichungstag der Anmeldung: 24.03.2021
(73) Patentinhaber: Motherson Innovations Company Limited, London EC2N 2AX (GB)
(72) Erfinder: WIECZOREK, Romeo, 70327 Stuttgart (DE)
(74) Vertreter: Weber-Bruls, Dorothée
(86) Internationale Anmeldenummer: PCT/EP2019/062419
(87) Internationale Veröffentlichungsnummer: WO 2019/219722

(56) Entgegenhaltungen:
- DE-A1- 10 232 797
- DE-A1- 102009 005 730
- DE-A1- 102016 208 405
- KR-A- 20170 088 319
- US-A1- 2012 212 353
- US-A1- 2018 111 628
- ANONYMOUS: "TOF-Kamera - Wikipedia", 23 April 2018 (2018-04-23), de.wikipedia.org, pages 1 - 7, XP093186872, Retrieved from the Internet <URL:https://de.wikipedia.org/w/index.php?title=TOF-Kamera&oldid=176801378> [retrieved on 20240717]

## Beschreibung

Die vorliegende Erfindung betrifft ein Verfahren zum Beeinflussen zumindest eines Fahrassistenzsystems eines Kraftfahrzeugs nach dem Oberbegriff von Anspruch 1, eine Vorrichtung zum Ausführen der Schritte dieses Verfahrens und ein System, umfassend eine solche Vorrichtung. Die Erfindung betrifft auch ein Kraftfahrzeug, umfassend eine solche Vorrichtung oder ein solches System.

Fahrassistenzsysteme für Kraftfahrzeuge sind gemeinhin bekannt. Gegenwärtig dürfen Fahrassistenzsysteme, insbesondere Bremsassistenten, eines Kraftfahrzeugs allerdings erst dann in das Geschehen eingreifen, wenn bestmöglich sichergestellt ist, dass der Kraftfahrzeugführer bei Auftreten einer Gefahrensituation selbst nicht mehr so rechtzeitig in das Geschehen eingreifen kann, um die drohende Gefahr rechtzeitig abwenden zu können.

Damit geht beispielsweise im Falle des Bremsassistenten einher, dass dieser unter Umständen erst so spät durch das Fahrassistenzsystem eingreift und beginnt, das Kraftfahrzeug zu verzögern, dass eine Vollbremsung, etwa vor einem Zebrastreifen, nur bei einer Ausgangsgeschwindigkeit des Kraftfahrzeugs von 30 km/h zu einem rechtzeitigen Stillstand desselbigen führt. Dies stellt jedoch für viele ähnlich gelagerte wie auch andere im Straßenverkehr auftretende Situationen eine nicht vollkommen befriedigende Lösung dar.

US 2012/0212353 A1 beschreibt ein Verfahren zur Beurteilung des Fahrverhaltens eines Fahrers, umfassend die Überwachung durch Fahrer-Überwachungssysteme, um die langsame Reaktionszeit, den Aufmerksamkeitsverlust oder die Wachsamkeit des Fahrers zu überwachen. Sobald das Überwachungssystem eine verminderte Reaktionsfähigkeit bzw. Wachsamkeit des Fahrers feststellt, kann der Betrieb von Fahrzeugsystemen modifiziert werden, um einen Unfall zu vermeiden.

US 2018/0111628 A1 offenbart eine Reise-Steuerungsvorrichtung eines Fahrzeuges mit einer Erfassungsvorrichtung zur Erfassung eines Zustandes des Fahrers, wobei ein Spurwechselassistent oder ein Fahrassistent aktiviert wird, sobald ein abnormale Zustand des Fahrers festgestellt wird.

DE 10 2016 208 405 A1 offenbart ein Verfahren zum Betreiben eines Fahrassistenzsystems für ein Kraftfahrzeug, wobei die Blickrichtung des Fahrers überwacht und mit einem Sollwert verglichen wird, wobei in Abhängigkeit von der Blickrichtung ein Aufmerksamkeitswert des Fahrers bestimmt wird.

DE 10 2009 005 730 A1 offenbart ein Verfahren und eine Vorrichtung zur Überwachung der Aufmerksamkeit eines Fahrers, wobei die Blickrichtung des Fahrers oder die Informationen eines Spurhalteassistenten überwacht werden, um eine Zeitdauer einer fehlenden Aufmerksamkeit aufzuzeichnen.

KR 2017 0088319 A lehrt eine Speichereinheit zum Speichern einer Handvenenmuster-Nachschlagetabelle, die eine Vielzahl von Handvenenmuster-Referenzbildern entsprechend einem Drehwinkel der Hand des Fahrers enthält, eine Bildgewinnungseinheit zum Gewinnen eines Fahrerbildes, das das Bild der Hand des Fahrers enthält, Extrahieren eines Hand-Rumpf-Venenmusterbildes der Hand des Fahrers aus dem Hand-Rumpf-Venenmusterbild, Vergleichen des Hand-Venenmusterbildes mit der Hand-Rumpf-Venenmuster-Nachschlagetabelle, um den Fahrer zu authentifizieren, und eine Steuereinheit zum Bestimmen einer Operation des Fahrers, die mindestens eine von einer Richtung, die durch die Hand des Fahrers angezeigt wird, und einen Drehwinkel der Hand des Fahrers einschließt, Suchen eines Hand-Rumpf-Venenmusterbildes, das mit dem Musterbild übereinstimmt, und Bestimmen eines Drehwinkels der Hand des Fahrers auf der Grundlage des Hand-Rumpf-Venenmusterbildes, das mit dem Musterbild übereinstimmt.

DE 102 32 797 A1 offenbart ein Verfahren zur Steigerung der Vigilanz eines Führers eines Fahrzeuges, insbesondere eines Kraftfahrzeuges, wobei der Fahrzeugführer zumindest zeitweise und/oder zumindest teilweise mit einer elektromagnetischen Strahlung beaufschlagt wird.

Es ist daher die Aufgabe der vorliegenden Erfindung, das gattungsgemäße Verfahren weiterzuentwickeln, um zumindest teilweise die Nachteile des Stands der Technik zu überwinden. Dabei ist es insbesondere Aufgabe das gattungsgemäße Verfahren derart weiterzuentwickeln, dass ein Fahrassistenzsystem bereitgestellt wird, welches die Nachteile des Stands der Technik überwindet und insbesondere zu einer sichereren und zuverlässigeren Eingriffswirkung bei auftretenden Gefahrensituationen führt.

Die Aufgabe wird gemäß dem Kennzeichen von Anspruch 1 gelöst. Vorteilhafte Ausführungsformen des Verfahrens sind in den Ansprüchen 2 bis 5 beschrieben.

Danach umfasst ein Verfahren zum Beeinflussen zumindest eines Fahrassistenzsystems eines Kraftfahrzeugs folgende Schritte: Empfangen zumindest eines zumindest ein Aufmerksamkeitsmerkmal zumindest eines Kraftfahrzeuginsassen repräsentierenden Signalwertes von zumindest einem Sensor; Ermitteln, anhand des Signalwertes, zumindest eines Aufmerksamkeitszustands des Kraftfahrzeuginsassen; Feststellen ob der Aufmerksamkeitszustand des Kraftfahrzeuginsassen einem ersten Aufmerksamkeitszustand entspricht; und in Reaktion auf das Feststellen, dass der Aufmerksamkeitszustand dem ersten Aufmerksamkeitszustand entspricht, Beeinflussen des Fahrassistenzsystems in einer ersten Weise.

Dabei kann bevorzugt ferner der Schritt umfasst sein: In Reaktion auf das Feststellen, dass der Aufmerksamkeitszustand nicht dem ersten Aufmerksamkeitszustand entspricht, wobei vorzugsweise der zuvor festgestellte Aufmerksamkeitszustand dem ersten Aufmerksamkeitszustand entspricht, Beeinflussen des Fahrassistenzsystems in einer zweiten Weise.

Besonders bevorzugt kann dabei vorgesehen sein, dass der bzw. die Signalwerte zumindest das Aufmerksamkeitsmerkmal betreffend
(i) zumindest ein Ergebnis einer Auswertung einer durch zumindest einen ersten Sensor festgestellten Zeitdauer, die der Kraftfahrzeuginsasse mit seinen Augen nicht am Straßenverkehr teilnimmt, insbesondere der Kraftfahrzeuginsasse seine Augen geschlossen und/oder die Blickrichtung des Kraftfahrzeuginsassen einer Richtung abweichend von der Fahrtrichtung des Kraftfahrzeugs entspricht,
(ii) zumindest ein Ergebnis einer Auswertung einer durch zumindest einen zweiten Sensor festgestellte Blickrichtung des Kraftfahrzeuginsassen, insbesondere bei einer abweichend von der Fahrtrichtung des Kraftfahrzeugs festgestellten Blickrichtung,
(iii) zumindest ein Ergebnis einer Auswertung einer durch zumindest einen dritten Sensor festgestellten Position zumindest eines Augenlids des Kraftfahrzeuginsassen, insbesondere eine die Augen geschlossene, eine die Augen halb geöffnete und/oder eine die Augen geöffnete Position des Augenlids des Kraftfahrzeuginsassen,
(iv) zumindest ein Ergebnis einer Auswertung einer durch zumindest einen vierten Sensor festgestellte Zeitdauer, während der der Kraftfahrzeuginsasse aufgrund seiner Kopfhaltung nicht am Straßenverkehr teilnimmt und/oder während der die Kopfhaltung einer, insbesondere nach seitlich, unten und/oder oben, verdrehten Kopfhaltung entspricht,
(v) zumindest ein Ergebnis einer Auswertung einer durch zumindest einen fünften Sensor festgestellten Kopfhaltung, insbesondere einer Kopfhaltung, aufgrund derer der Kraftfahrzeuginsasse nicht am Straßenverkehr teilnimmt und/oder einer nach seitlich, unten und/oder oben verdrehten Kopfhaltung,
(vi) zumindest ein Ergebnis einer Auswertung einer durch zumindest einen sechsten Sensor festgestellten Zeitdauer, während der der Kraftfahrzeuginsasse aufgrund seiner Körperhaltung nicht am Straßenverkehr teilnimmt und/oder während der die Körperhaltung einer, insbesondere nach seitlich und/oder unten, gebeugten Körperhaltung entspricht,
(vii) zumindest ein Ergebnis einer Auswertung einer durch zumindest einen siebenten Sensor festgestellten Körperhaltung, insbesondere einer Körperhaltung, aufgrund derer der Kraftfahrzeuginsasse nicht am Straßenverkehr teilnimmt und/oder einer nach seitlich und/oder unten gebeugten Körperhaltung,
(viii) zumindest ein Ergebnis einer Auswertung einer durch zumindest einen achten Sensor festgestellten Umgebungssituation, insbesondere im Seiten-, Rück- und/oder Frontbereich des Kraftfahrzeugs,
(ix) zumindest ein Ergebnis einer Auswertung einer durch zumindest einen neunten Sensors festgestellten Anzahl an Mitinsassen im Kraftfahrzeug, und/oder
(x) zumindest ein Ergebnis einer Auswertung einer durch zumindest einen zehnten Sensor festgestellten Anzahl, insbesondere einer ersten Auswahlgruppe zugeordneten, und/oder Art der in dem Kraftfahrzeug aktivierten weiteren Fahrassistenzsysteme repräsentiert und/oder repräsentieren.

Ferner kann auch vorgesehen sein, dass
(i) der Signalwert einen Wert zwischen einschließlich einem unteren und einschließlich einem oberen Grenzwert, insbesondere zwischen einschließlich Null und einschließlich Eins, annehmen kann, wobei der untere Grenzwert eine geringste Aufmerksamkeit des Kraftfahrzeuginsassen und der obere Grenzwert eine höchste Aufmerksamkeit des Kraftfahrzeuginsassen bezüglich des durch den Signalwert repräsentierten Aufmerksamkeitsmerkmals repräsentiert und/oder darstellt,
(ii) bei der Ermittlung des Aufmerksamkeitszustands des Kraftfahrzeuginsassen der erste Aufmerksamkeitszustands ermittelt wird, wenn zumindest ein Signalwert einen diesem zugeordneten ersten Grenzwert unter- und/oder überschreitet,
(iii) bei der Ermittlung des Aufmerksamkeitszustands des Kraftfahrzeuginsassen die Signalwerte ausgewertet und/oder miteinander in Beziehung gesetzt werden,
(iv) bei der Ermittlung des Aufmerksamkeitszustands des Kraftfahrzeuginsassen die Signalwerte in Abhängigkeit des durch sie repräsentierten Aufmerksamkeitsmerkmals unterschiedlich gewichtet werden, insbesondere der Fall, dass der Kraftfahrzeuginsasse mit seinen Augen nicht am Straßenverkehr teilnimmt, insbesondere der Kraftfahrzeuginsasse seine Augen geschlossen und/oder die Blickrichtung des Kraftfahrzeuginsassen einer Richtung abweichend von der Fahrtrichtung des Kraftfahrzeugs entspricht, weniger dazu beiträgt, dass der Aufmerksamkeitszustand dem ersten Aufmerksamkeitszustand entspricht als der Fall, dass der Kraftfahrzeuginsasse aufgrund seiner Kopfhaltung und/oder Körperhaltung nicht am Straßenverkehr teilnimmt, und/oder
(v) festgestellt wird, dass der Aufmerksamkeitszustands des Kraftfahrzeuginsassen dem ersten Aufmerksamkeitszustand entspricht, wenn die Anzahl der in dem Kraftfahrzeug aktivierten weiteren Fahrassistenzsysteme einen zweiten Grenzwert überschreitet und/oder wenn sich zumindest ein und/oder eine einen dritten Grenzwert überschreitende Anzahl an, insbesondere zumindest einer zweiten Auswahlgruppe zugeordneten, weiteren Fahrassistenzsysteme des Kraftfahrzeugs in einem aktivierten Zustand befinden.

Bevorzugt kann auch sein, dass
(i) das Beeinflussen des Fahrassistenzsystems in der ersten Weise (a) das Überführen des Fahrassistenzsystems aus einem ersten, insbesondere deaktivierten, in einen zweiten, insbesondere aktivierten, Betriebszustand, (b) das Verändern, insbesondere Reduzieren, zumindest einer Auslöseschwelle für einen Eingriff des Fahrassistenzsystems und/oder (c) das Manipulieren, insbesondere Herabsetzen, eines Schwellenwertes des Fahrassistenzsystems, wobei der Schwellenwert vorzugsweise zumindest eine Eigenschaft zumindest einer Funktion des Fahrassistenzsystems beeinflusst, umfasst und/oder darstellt,
(ii) das Beeinflussen des Fahrassistenzsystems in der zweiten Weise (a) das Überführen des Fahrassistenzsystems aus einem zweiten, insbesondere aktivierten, in einen ersten, insbesondere deaktivierten, Betriebszustand, (b) das Verändern, insbesondere Erhöhen, zumindest einer Auslöseschwelle für einen Eingriff des Fahrassistenzsystems und/oder (c) das Manipulieren, insbesondere Erhöhen, eines Schwellenwertes des Fahrassistenzsystems, wobei der Schwellenwert vorzugsweise zumindest eine Eigenschaft zumindest einer Funktion des Fahrassistenzsystems beeinflusst, umfasst und/oder darstellt,
(iii) der erste Aufmerksamkeitszustand Unaufmerksamkeit darstellt und/oder repräsentiert,
(iv) der Kraftfahrzeuginsasse den Kraftfahrzeugführer darstellt,
(v) das Fahrassistenzsystems zumindest einen Bremsassistent, insbesondere in Verbindung mit einem PreSafe-System und/oder einer Fußgängererkennung, zumindest einen Spurhalteassistent, zumindest einem Lenkassistenten, insbesondere mit integrierter Abstandshaltung und/oder integrierter Distronic, zumindest ein Abstandshalteassistent, zumindest ein Verfolgungsassistent, insbesondere umfassend zumindest eine Geschwindigkeitsanpassung, zumindest ein Ausweichassistent, insbesondere zum Bremsen anstatt zum Ausweichen bei Unachtsamkeit des Fahrers, und/oder zumindest ein Totwinkelassistent, insbesondere ein aktiver Totwinkelassistent, vorzugsweise um bei Unachtsamkeit des Fahrers kurzfristig eingestellt zu werden, um ein ungewünschtes Wechseln der Fahrspur zu verhindern, umfasst und/oder darstellt, und/oder
(vi) die weiteren Fahrassistenzsysteme zumindest ein Fahrassistenzsystem aus der Gruppe umfassend Bremsassistent, insbesondere in Verbindung mit einem PreSafe-System und/oder einer Fußgängererkennung, Spurhalteassistent, Lenkassistent, insbesondere mit integrierter Abstandshaltung und/oder integrierter Distronic, Abstandshalteassistent, Verfolgungsassistent, insbesondere umfassend zumindest eine Geschwindigkeitsanpassung, Ausweichassistent, insbesondere zum Bremsen anstatt zum Ausweichen bei Unachtsamkeit des Fahrers, und/oder Totwinkelassistent, insbesondere ein aktiver Totwinkelassistent, vorzugsweise um bei Unachtsamkeit des Fahrers kurzfristig eingestellt zu werden, um ein ungewünschtes Wechseln der Fahrspur zu verhindern, umfassen.

Die Aufgabe wird gemäß einem weiteren Aspekt der Erfindung gelöst durch eine Vorrichtung zum Beeinflussen zumindest eines Fahrassistenzsystems eines Kraftfahrzeugs, umfassend zumindest eine Prozessoreinheit, die dazu eingerichtet ist, die Schritte des Verfahrens gemäß dem ersten Aspekt der Erfindung auszuführen. Bevorzugte Ausführungsformen der Vorrichtung sind in Anspruch 6 beschrieben.

Die Aufgabe wird gemäß einem noch weiteren Aspekt der Erfindung gelöst durch ein System zum Beeinflussen zumindest eines Fahrassistenzsystems eines Kraftfahrzeugs, umfassend zumindest eine erfindungsgemäße Vorrichtung und zumindest einen ersten, zweiten, dritten, vierten, fünften, sechsten, siebenten, achten, neunten und/oder zehnten Sensor. Bevorzugte Ausführungsformen des Systems sind in den Ansprüchen 7 und 8 beschrieben.

Dabei ist bevorzugt, dass
(i) der erste, der zweite und/oder der dritte Sensor zumindest einen Eye-Tracking-Sensor umfasst und/oder darstellt, insbesondere der erste, der zweite und/oder der dritte Sensor zumindest bereichsweise in einem ausgeführt sind und/oder denselben Eye-Tracking-Sensor umfasst und/oder darstellt,
(ii) der vierte, fünfte, sechste und/oder siebente Sensor zumindest einen Body-Tracking-Sensor, insbesondere einen Tiefenmess-Sensor, einen Time-Of-Flight-Sensor, und/oder zumindest eine, vorzugsweise eine Vielzahl von, insbesondere beabstandet und/oder getrennt von dem ersten, zweiten, dritten, vierten, fünften, sechsten und/oder siebenten Sensor ausgebildete(n) und/oder angeordnete(n) Leuchteinheit(en), vorzugsweise Infrarotbeleuchtungseinheit(en), umfasst und/oder darstellt, wobei vorzugsweise der vierte, fünfte, sechste und/oder siebente Sensor zumindest bereichsweise in einem ausgeführt sind und/oder denselben Body-Tracking-Sensor umfasst und/oder darstellt,
(iii) der achte Sensor zumindest eine Kamera, insbesondere Front- und/oder Heckkamera, zumindest einen Radar-Sensor, zumindest einen Lidar-Sensor und/oder zumindest ein Surroundviewsystem umfasst und/oder darstellt,
(iv) der erste, zweite, dritte, vierte, fünfte, sechste, siebente, achte, neunte und/oder zehnte Sensor zumindest bereichsweise in einem ausgeführt sind und/oder zumindest einen Hardwaresensor und/oder zumindest eine softwarebasierte Ausgestaltung umfasst und/oder darstellt, und/oder
(v) der erste, zweite, dritte, vierte, fünfte, sechste, siebente, achte, neunte und/oder zehnte Sensor von zumindest einer Rückblickvorrichtung umfasst ist bzw. sind.

Die Aufgabe wird zudem durch ein Kraftfahrzeug umfassend zumindest eine erfindungsgemäße Vorrichtung bzw. durch ein Kraftfahrzeug umfassend zumindest ein erfindungsgemäßes System gelöst. Bevorzugte Ausführungsformen des Kraftfahrzeugs sind in den Ansprüchen 9 und 10 beschrieben.

Der Erfindung liegt somit die überraschende Erkenntnis zugrunde, dass durch eine Überwachung zumindest eines Aufmerksamkeitszustandes zumindest eines Kraftfahrzeuginsassen, insbesondere des Kraftfahrzeugführers, eines Kraftfahrzeugs ein auftretender erster Aufmerksamkeitszustand, insbesondere eine Unaufmerksamkeit, des Kraftfahrzeuginsassen frühzeitig festgestellt und einhergehend mit dieser Feststellung zumindest ein Fahrassistenzsystem beeinflusst werden kann, so dass das Fahrassistenzsystem dementsprechend frühzeitig Verantwortung übernehmen und rechtzeitig geeignete Maßnahmen zur Gefahrenverringerung einleiten kann.

Dabei wurde von den Erfindern insbesondere erkannt, dass die Beeinflussung nicht nur eine Aktivierung eines zuvor nicht aktivierten Fahrassistenzsystems, sondern alternativ oder ergänzend insbesondere auch eine Veränderung zumindest einer Auslöseschwelle für einen Eingriff des Fahrassistenzsystems darstellen kann. Dadurch ist es möglich, dass im Falle der Unaufmerksamkeit des Kraftfahrzeuginsassen durch das Fahrassistenzsystem weitaus früher in das Geschehen eingegriffen werden kann als es bisher der Fall ist. Denn bei festgestelltem ersten Aufmerksamkeitszustand muss nicht mehr der für einen Eingriff durch den Kraftfahrzeuginsassen spätest möglicher Zeitpunkt abgewartet werden muss, sondern es können sofort entsprechende Vorsichtsmaßnahmen ergriffen werden. Dadurch erhöht sich nicht nur die Sicherheit für Insassen in dem betreffenden Kraftfahrzeug, sondern gleichermaßen auch für alle übrigen Teilnehmer des Straßenverkehrs.

Es hat sich dabei gezeigt, dass zur Ermittlung des Aufmerksamkeitszustands des Kraftfahrzeuginsassen ein, besonders bevorzugt aber zwei, und ganz besonders bevorzugt eine Vielzahl an Signalwerten ausgewertet und/oder miteinander in Beziehung gesetzt werden. Jeder Signalwert repräsentiert dabei ein Aufmerksamkeitsmerkmal des Kraftfahrzeuginsassen. Dabei ist unter einem Aufmerksamkeitsmerkmal im Sinne dieser Erfindung ein Aspekt zu verstehen, der Rückschlüsse auf die gegenwärtige und zukünftige Aufmerksamkeit des Kraftfahrzeuginsassen erlaubt. So sind etwa die Blickrichtung, die Kopfhaltung und die Körperhaltung des Kraftfahrzeuginsassen als geeignete Kriterien von den Erfindern identifiziert worden, einen Rückschluss auf die momentane Aufmerksamkeit des Kraftfahrzeuginsassen zu ziehen. Alternativ oder ergänzend kann auch jeweils die Dauer, mithin die zeitliche Komponente, einer Ablenkung berücksichtigt werden. Aber auch Aspekte, die nicht in der Person des Kraftfahrzeuginsassen liegen, können zur Beurteilung der Aufmerksamkeit des Kraftfahrzeuginsassen geeignet sein. So wurde erkannt, dass etwa die Umgebungssituation des Kraftfahrzeugs vorteilhaft bei der Ermittlung des Aufmerksamkeitszustands mit einbezogen werden kann.

Die einzelnen Signalwerte werden dabei von einem entsprechenden, insbesondere die Signalwerte sendenden, Sensor empfangen. Der jeweilige Sensor kann dabei vorzugsweise als Hardwaresensor und/oder als softwarebasierter Sensor vorgesehen sein. Die Signalwerte können dabei bevorzugt einen Signalwert zwischen einschließlich einem unteren und einschließlich einem oberen Grenzwert, insbesondere zwischen einschließlich Null und einschließlich Eins, annehmen. Dadurch ist eine besonders zuverlässige Möglichkeit geboten, die Signalwerte unterschiedlicher Sensoren zusammenzuführen und miteinander in Beziehung zu setzen. So stellt beispielsweise der untere Grenzwert eine geringste Aufmerksamkeit des Kraftfahrzeuginsassen und der obere Grenzwert eine höchste Aufmerksamkeit des Kraftfahrzeuginsassen bezüglich des durch den Signalwert repräsentierten Aufmerksamkeitsmerkmals dar.

Die Erfinder haben in diesem Zusammenhang festgestellt, dass es sich als besonders vorteilhaft erweist, wenn die unterschiedlichen Signalwerte bei der Ermittlung des Aufmerksamkeitszustands unterschiedlich gewichtet werden. Damit ist es komfortabel möglich, gezielt zu berücksichtigen, dass etwa das Aufmerksamkeitsmerkmals betreffend die Blickrichtung des Kraftfahrzeuginsassen weniger stark zum Vorliegen des ersten Aufmerksamkeitszustand beiträgt als etwa das Aufmerksamkeitsmerkmal betreffend die Kopf- und/oder Körperhaltung.

So kann beispielsweise ein eine hohe Unaufmerksamkeit anzeigender Signalwert eines ersten Aufmerksamkeitsmerkmals (zum Beispiel der obere Grenzwert) und ein eine geringe Unaufmerksamkeit anzeigender Signalwert eines zweiten Aufmerksamkeitsmerkmals (zum Beispiel der untere Grenzwert) vorliegen. Wird der Signalwert des ersten Aufmerksamkeitsmerkmals stark gewichtet und der Signalwert des zweiten Aufmerksamkeitsmerkmals gering gewichtet, wird der erste Aufmerksamkeitszustand ermittelt. Umgekehrt, bei einem gering gewichten Signalwert des ersten Aufmerksamkeitsmerkmals und einem stark gewichten Signalwert des zweiten Aufmerksamkeitsmerkmals könnte vorliegend ein von dem ersten Aufmerksamkeitszustand abweichender Aufmerksamkeitszustand ermittelt und anschließend festgestellt werden.

Als besonders wirkungsvoll hat sich zudem herausgestellt, wenn als weiteres Aufmerksamkeitsmerkmal die Anzahl, insbesondere einer ersten Auswahlgruppe zugeordneten, und/oder Art der in dem Kraftfahrzeug aktivierten weiteren Fahrassistenzsysteme herangezogen wird. Da durch das Aktivieren weiterer Fahrassistenzsysteme durch den Kraftfahrzeugführer regelmäßig darauf geschlossen werden kann, dass sich der Kraftfahrzeugführer sicher fühlt, kann dies als Aspekt einer drohenden Unaufmerksamkeit sehr vorteilhaft bei der Ermittlung des Aufmerksamkeitszustands berücksichtigt werden. Mithin kann bei aktivierten Fahrassistenzsysteme ggf. sofort eine Bremsung eingeleitet werden, wenn Objekte auf der Fahrbahn erkannt werden.

Durch den Einsatz geeigneter Sensoren, insbesondere Time-Of-Flight-Sensoren, kann vorzugsweise durch eine entsprechende Distanzmessung, auf besonders effektive Weise Körper- und Kopfdrehungen erkannt und ausgewertet werden. Dabei wird bevorzugt zumindest eine Infrarotbeleuchtungseinheit eingesetzt, die den Erfassungsbereich des Sensors ausleuchtet und/oder vorgibt.

Ein solcher Sensor, insbesondere Time-Of-Flight (TOF) Sensor, kann als Kamera ausgebildet sein und/oder selber über eine eigene Leuchteinheit verfügen, um den Bereich vor der Kamera aktiv zu beleuchten.

Diese Sensoren, insbesondere TOF Sensoren, können dadurch verbessert werden, dass eine zusätzliche, also von dem Sensor bzw. dem Detektionselement des Sensors, getrennt ausgebildete und/oder beabstandet angeordnete Leuchteinheit vorgesehen ist. Es hat sich herausgestellt, dass für die Erkennung des Kraftfahrzeuginsassen mittels des Sensors, wie zum Beispiel einer Hand oder eines Kopfs, insbesondere die eindeutige Identifizierung einer Geste, einer Blickrichtung, einer Kopfposition und -bewegung und/oder einer Mimik des Kraftfahrzeuginsassen wichtig ist. Dabei ist eine eindeutige Erkennung auch bei größeren Entfernungen von dem Sensor, insbesondere der Kamera, sicherzustellen. Um diese Erkennung auch in größeren Entfernungen sicherstellen zu können, kann mittels der Leuchteinheit ein verbesserte Ausleuchtung des Tiefenbereichs erreicht werden. So kann das Kamerasystem auch bei größeren Entfernungen ausreichende Daten liefern, die es dem erfindungsgemäßen Verfahren erlauben, eine eindeutige Aussage über das Aufmerksamkeitsmerkmal des Kraftfahrzeuginsassen zu treffen. Insbesondere auch bei unterschiedlichen Sitzpositionen wird so sichergestellt, dass der Kraftfahrzeuginsasse genügend ausgeleuchtet werden kann und/oder der Kraftfahrzeuginsasse vollständig im Erfassungsbereich des Sensors liegt. Besonders vorteilhaft emittiert die Leuchteinheit elektromagnetische Strahlung außerhalb des für den Kraftfahrzeuginsassen sichtbaren Bereich, wie Infrarotbereich. Dadurch wird eine Blendung des Kraftfahrzeuginsassen, insbesondere auch bei hohen Leichtintensitäten zur Erreichung eines hohen Tiefenbereichs bei der Ausleuchtung vermieden.

So kann die Erkennung des Aufmerksamkeitsmerkmals des Kraftfahrzeuginsassen und damit die Beeinflussung des Fahrassistenzsystems mit höherer Zuverlässigkeit durchgeführt werden. Bei solchen Sensoren, insbesondere TOF-Sensoren, kann durch die, getrennt zu dem Sensor angeordnete Leuchteinheit, eine Ausleuchtung von verschiedenen Bereichen im Innenraum des Kraftfahrzeugs darart durchgeführt werden, dass diese an den Zustand des Kraftfahrzeuginsassen, des Kraftfahrzeugs und/oder der Umgebung des Kraftfahrzeugs und/oder der Entfernung des Kraftfahrzeuginsassen zu der Kamera und/oder Sensor angepasst ist. So kann die Ausleuchtung mittels der Leuchteinheit, vorzugsweise mehrerer Leuchteinheit, vorzugsweise basierend auf diesen Parametern, verändert werden.

Sowohl der Sensor, in Form des TOF-Sensors, als auch die zusätzliche Leuchteinheit, insbesondere eine Vielzahl von zusätzlichen Leuchteinheiten können beispielsweise in einem Armaturenbrett, einer Mittelkonsole, insbesondere eine versenk- oder verfahrbaren Mittelkonsole, einer Windschutzscheibe, einem Dach, einem Dachhimmel, einem Haltegriff, einer A-Säule, einer B-Säule, einer C-Säule, einer Türkomponente, oberhalb einer Tür, einem Gehäuse, insbesondere ein kuppelförmiges Gehäuse im Bereich der Kraftfahrzeugmitte am Dach oder Dachhimmel, einer Anzeigeeinrichtung, einem Kraftfahrzeuginsassensitz, insbesondere einem Kopfteil, einem Fußteil und/oder einer Armlehne des Kraftfahrzeuginsassensitzes, einem Rückhaltesystem für den Kraftfahrzeuginsassen, einem Positionierungsmechanismus, insbesondere einem motorbetriebenen Positionierungsmechanismus, einer Verkleidung und/oder das Gerät, insbesondere in Form eines mobilen Geräts des Objekts, angebracht oder darin integriert sein.

Weitere Merkmale und Vorteile der Erfindung ergeben sich aus der nachfolgenden Beschreibung, in der bevorzugte Ausführungsformen der Erfindung anhand von schematischen Zeichnungen und Diagrammen erläutert sind.

Dabei zeigen:
- Figur 1: eine Anordnung von Sensoren innerhalb einer Rückblickvorrichtung;
- Figur 2: ein Ablaufdiagramm eines erfindungsgemäßen Verfahrens gemäß dem ersten Aspekt der Erfindung
- Figur 3: eine erste Situation eines Kraftfahrzeuginsassen;
- Figur 4: eine zweite Situation eines Kraftfahrzeuginsassen;
- Figur 5: eine dritte Situation eines Kraftfahrzeuginsassen;
- Figur 6: eine vierte Situation eines Kraftfahrzeuginsassen;
- Figur 7a, 7b: eine Explosionsansicht und eine Seitenansicht einer beispielhaften zusätzlichen Leuchteinheit; und
- Figur 8: eine schematische Draufsicht auf ein Kraftfahrzeug mit zusätzlichen Leuchteinheiten.

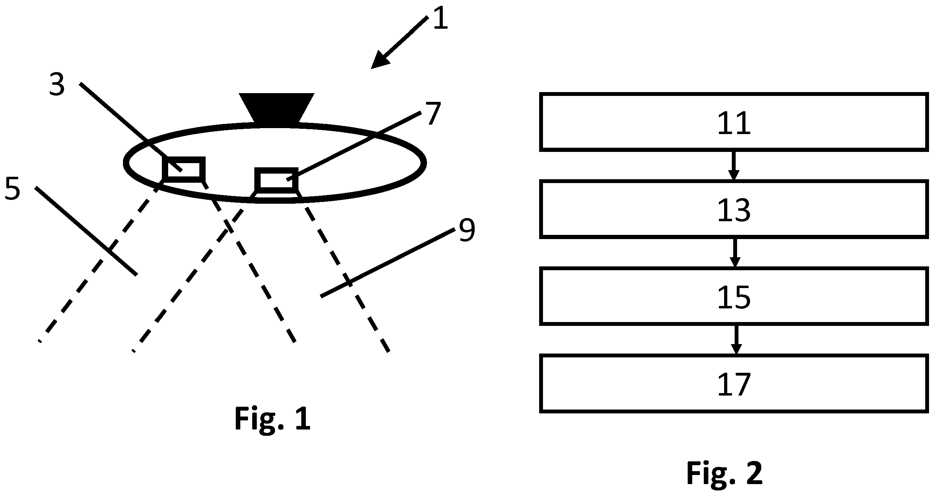

Figur 1 zeigt eine in einem ansonsten nicht näher dargestellten Kraftfahrzeug angeordnete Rückblickvorrichtung 1 in Form eines Rückspiegels im Innenraum des Kraftfahrzeugs aus Sicht des Kraftfahrzeuginsassen, insbesondere des Kraftfahrzeugführers.

Von der Rückblickvorrichtung 1 umfasst ist ein Eye-Tracking-Sensor 3. Der Eye-Tracking-Sensor 3 verfolgt die Augenbewegung des Kraftfahrzeuginsassen und ermöglicht es somit, die Blickrichtung des Kraftfahrzeuginsassen, insbesondere eine abweichend von der Fahrtrichtung des Kraftfahrzeugs bestehenden Blickrichtung, festzustellen. Außerdem ermöglicht es derselbe Eye-Tracking-Sensor 3, die Zeitdauer, die der Kraftfahrzeuginsasse mit seinen Augen nicht am Straßenverkehr teilnimmt, insbesondere der Kraftfahrzeuginsasse seine Augen geschlossen und/oder die Blickrichtung des Kraftfahrzeuginsassen einer Richtung abweichend von der Fahrtrichtung des Kraftfahrzeugs entspricht, festzustellen.

Von dem Eye-Tracking-Sensor 3 können entsprechend die die beiden Aufmerksamkeitsmerkmale repräsentierenden Signalwerte empfangen werden.

Der Sensor 3 hat einen Erfassungsbereich 5, innerhalb derer er die Augen eines Kraftfahrzeuginsassen verfolgen kann. Vorzugsweise ist von dem Erfassungsbereich 5 nicht nur der Bereich des Sitzes des Kraftfahrzeugführers abgedeckt, sondern darüber hinaus zumindest auch der Bereich der Mittelkonsole. Dadurch bewegt sich auch ein sich seitlich beugender Kraftfahrzeugführer immer noch innerhalb des Erfassungsbereichs 5 und kann somit zuverlässig von dem Eye-Tracking-Sensor 3 verfolgt werden.

Von der Rückblickvorrichtung 1 umfasst ist ferner ein Time-Of-Flight (TOF)-Sensor 7 mit zusätzlicher Infrarotbeleuchtungseinheit. Der TOF-Sensor 7 kann die innerhalb eines Erfassungsbereichs 9 befindlichen Objekte erfassen. In dem dabei erfassten Bild kann der TOF-Sensor 7 zu jedem Bildpunkt einen Distanzwert bezogen auf einen Referenzpunkt, beispielsweise die Rückblickvorrichtung 1, berechnen. Der TOF-Sensor 7 kann dadurch die Kopf- und Körperhaltung des Kraftfahrzeuginsassen erfassen und auswerten.

Dadurch ist es möglich, die Zeitdauer, während der der Kraftfahrzeuginsasse aufgrund seiner Kopfhaltung nicht am Straßenverkehr teilnimmt und/oder während der die Kopfhaltung einer, insbesondere nach seitlich, unten und/oder oben, verdrehten Kopfhaltung entspricht, festzustellen. Außerdem ist es so möglich, die Kopfhaltung, insbesondere einer Kopfhaltung, aufgrund derer der Kraftfahrzeuginsasse nicht am Straßenverkehr teilnimmt und/oder einer nach seitlich, unten und/oder oben verdrehten Kopfhaltung, festzustellen.

Ebenfalls ist es mit dem TOF-Sensor 7 möglich, die Zeitdauer, während der der Kraftfahrzeuginsasse aufgrund seiner Körperhaltung nicht am Straßenverkehr teilnimmt und/oder während der die Körperhaltung einer, insbesondere nach seitlich und/oder unten, gebeugten Körperhaltung entspricht, festzustellen. Und auch die Körperhaltung, insbesondere einer Körperhaltung, aufgrund derer der Kraftfahrzeuginsasse nicht am Straßenverkehr teilnimmt und/oder einer nach seitlich und/oder unten gebeugten Körperhaltung, kann so festgestellt werden.

Von dem TOF-Sensor 7 können entsprechend die die vier Aufmerksamkeitsmerkmale repräsentierenden Signalwerte empfangen werden.

Figur 2 zeigt ein Ablaufdiagramm umfassend Schritte gemäß dem ersten Aspekt der Erfindung. In einem Schritt 11 des Verfahrens werden die oben beschriebenen sechs Aufmerksamkeitsmerkmale (Blickrichtung, Zeitdauer abgewendeter Blick, Kopfhaltung, Zeitdauer abgewendete Kopfhaltung, Körperhaltung, Zeitdauer abgewendete Körperhaltung) des Kraftfahrzeuginsassen repräsentierenden Signalwerte von dem Eye-Tracking-Sensor 3 und dem TOF-Sensor 7 empfangen. In einem Schritt 13 wird anhand der Signalwerte zumindest ein Aufmerksamkeitszustands des Kraftfahrzeuginsassen ermittelt. In einem Schritt 15 wird festgestellt, ob der Aufmerksamkeitszustand des Kraftfahrzeuginsassen einem ersten Aufmerksamkeitszustand, insbesondere Unaufmerksamkeit, entspricht. In einem Schritt 17 erfolgt in Reaktion auf das Feststellen, dass der Aufmerksamkeitszustand dem ersten Aufmerksamkeitszustand entspricht, das Beeinflussen des Fahrassistenzsystems in einer ersten Weise.

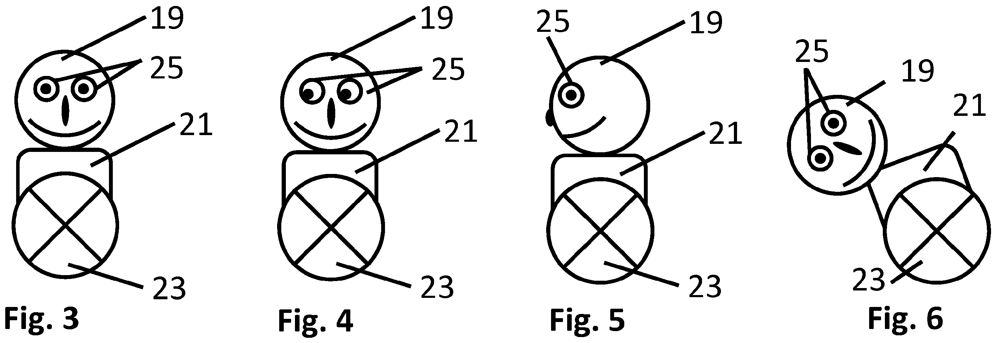

Figur 3 zeigt eine erste Situation eines Kraftfahrzeuginsassen, insbesondere des Kraftfahrzeugführers, in dem ansonsten nicht näher dargestellten Kraftfahrzeug umfassend die Rückblickeinrichtung 1 der Figur 1.

Der Kraftfahrzeuginsassen, umfassend einen Kopf 19 und einen Oberkörper 21, befindet sich hinter dem Steuer 23 des Kraftfahrzeugs. Die Augen 25 des Kraftfahrzeuginsassen blicken geradeaus in Richtung der Fahrtrichtung. Sowohl Kopf 19 als auch Oberkörper 21 befinden sich in einer richtigen Haltung, also einer Haltung, in der davon auszugehen ist, dass der Kraftfahrzeuginsasse, insbesondere Fahrzeugführer, mit maximaler Aufmerksamkeit dem Verkehrsgeschehen folgt.

Dementsprechend wird in dieser ersten Situation in Schritt 11 sowohl von dem Eye-Tracking-Sensor 3 als auch von dem TOF-Sensor 7 ein Signalwert bezüglich der Blickrichtung, Kopfhaltung und Körperhaltung von jeweils Eins (1) empfangen, entsprechend maximaler Aufmerksamkeit. Entsprechend wird in Schritt 13 ein anderer als der erste Aufmerksamkeitszustand ermittelt und in Schritt 15 festgestellt. Eine Beeinflussung des Fahrassistenzsystems in der ersten Weise erfolgt mithin nicht.

Figur 4 zeigt eine zweite Situation des Kraftfahrzeuginsassen.

Wie in der ersten Situation befinden sich sowohl Kopf 19 als auch Oberkörper 21 in einer richtigen Haltung. Allerdings wird in dem Schritt 11 von dem Eye-Tracking-Sensor 3 ein Signalwert bezüglich der Blickrichtung von Null (0) empfangen, welcher in Bezug auf dieses Aufmerksamkeitsmerkmal eine minimale Aufmerksamkeit repräsentiert. Grund dafür ist der Blick des Kraftfahrzeuginsassen nach, aus seiner Sicht, rechts unten zum Handschuhfach.

Ob in dem Schritt 13 der erste Aufmerksamkeitszustand ermittelt und in Schritt 15 festgestellt wird, ist abhängig von dem Signalwert bezüglich des Aufmerksamkeitsmerkmals betreffend die Zeitdauer des abgewendeten Blicks.

Erst wenn sich der Blick des Kraftfahrzeuginsassen nicht mehr nur kurzzeitig von der vorausliegenden Fahrbahn abwendet, wird in Schritt 13 der erste Aufmerksamkeitszustand ermittelt und in Schritt 15 festgestellt sowie entsprechend in Schritt 17 eine Beeinflussung des Fahrassistenzsystems in der ersten Weise durchgeführt. Denn in diesem Fall kann davon ausgegangen werden, dass der Kraftfahrzeuginsasse abgelenkt wird.

Figur 5 zeigt eine dritte Situation des Kraftfahrzeuginsassen.

Diese dritte Situation stellt die typische Situation einer Unterhaltung zwischen dem Kraftfahrzeuginsassen und weiteren Kraftfahrzeuginsassen, insbesondere dem Beifahrer, dar. Wie in der ersten und zweiten Situation befindet sich der Oberkörper 21 in einer richtigen Haltung. Allerdings wird in dem Schritt 11 von dem Eye-Tracking-Sensor 3 ein Signalwert bezüglich der Blickrichtung von Null (0) und von dem TOF-Sensor 7, aufgrund des seitlich verdrehten Kopfes 19, auch ein Signalwert bezüglich der Kopfhaltung von Null (0) empfangen, welche in Bezug auf diese Aufmerksamkeitsmerkmale jeweils eine minimale Aufmerksamkeit repräsentieren.

In dem Schritt 13 wird ausgehend davon der erste Aufmerksamkeitszustand ermittelt und in Schritt 15 entsprechend festgestellt. Daraufhin wird in Schritt 17 eine Beeinflussung des Fahrassistenzsystems in der ersten Weise durchgeführt. Vorliegend wird mithin der Bremsassistent aktiviert und zumindest eine Auslöseschwelle für einen Eingriff des Bremsassistenten reduziert, da die dritte Situation als besonders kritisch eingestuft wird.

Figur 6 zeigt eine vierte Situation des Kraftfahrzeuginsassen.

Diese vierte Situation stellt die typische Situation dar, in der sich der Kraftfahrzeuginsasse seitlich zum Handschuhfach beugt. In dem Schritt 11 wird von dem Eye-Tracking-Sensor 3 ein Signalwert bezüglich der Blickrichtung von Eins (1) empfangen, da sich der Blick weiterhin auf die Fahrbahn richtet und somit diesbezüglich maximale Aufmerksamkeit besteht. Allerdings sind nun die von dem TOF-Sensor 7 empfangen Signalwerte sowohl bezüglich der Kopfhaltung als auch bezüglich der Körperhaltung jeweils vom Wert Null (0) und stellen bezüglich dieser Aufmerksamkeitsmerkmale minimale Aufmerksamkeit dar.

Aufgrund der durchgeführten Gewichtung der einzelnen Signalwerte wird vorliegend erst bei einer gewissen Zeitdauer der Verdrehung von Kopf 19 und Oberkörper 21 in dem Schritt 13 der erste Aufmerksamkeitszustand ermittelt und in Schritt 15 entsprechend festgestellt. Zuvor jedoch wird nicht der erste Aufmerksamkeitszustand ermittelt und festgestellt.

Auch wenn vorliegend die Situationen eins bis vier der Figuren 3 bis 6 mit Signalwerten von entweder Null (0) oder Eins (1) beschrieben wurden, versteht der Fachmann, dass jeder Wert zwischen dem unteren und oberen Grenzwert von dem Signal angenommen werden kann. So könnte bei einer Beugung des Oberkörpers ausgehend von der ordnungsgemäßen Fahrhaltung von dem TOF-Sensor über die Zeit hinweg ein sich ändernder Signalwert von Eins in Richtung Null empfangen werden.

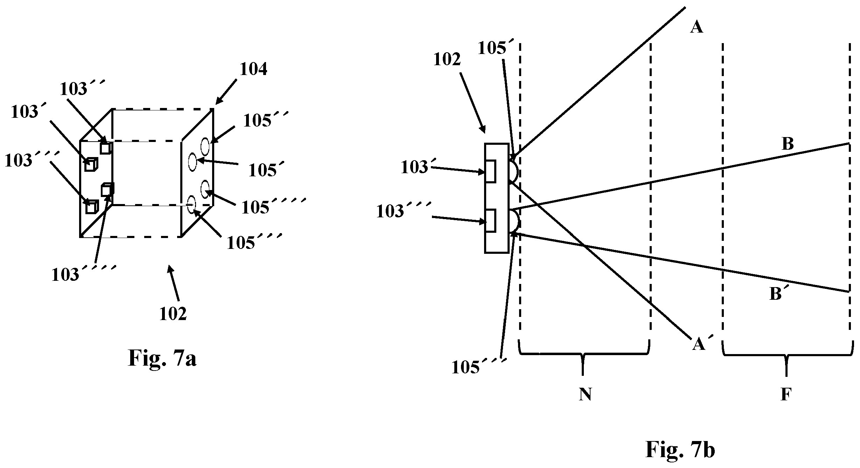

Eine für den Einsatz in einem erfindungsgemäßen Verfahren, System und Kraftfahrzeug geeignete Leuchteinheit 102 ist in Fig. 7a und 7b gezeigt, und zwar mit einer Matrix aus Leuchtdioden (LED) 103' bis 103ʺʺ und somit mit einer Matrixoptik, wie zum Beispiel bei einem Linsenarray.

Dabei umfasst die Leuchteinheit 102 die in der Explosionsansicht der Fig. 7a gezeigten Leuchtquellen 103' bis 103ʺʺ mit den jeweils dazugehörigen und den Leuchtquellen 103' bis 103ʺʺ nachgeschalteten optischen Elementen 105' bis 105ʺʺ eines Optiksystems 104. So kann zum Beispiel durch die Aktivierung der Leuchtquelle 103' ein Nahfeld beleuchtet werden, und durch die Leuchtquelle 103‴ ein Fernfeld.

Wie in der Seitenansicht in Fig. 7b angedeutet, weiten sich die Lichtstrahlen mit zunehmendem Abstand von der Leuchteinheit 102 immer weiter auf. Der von Leuchtquelle 103' beleuchtete Bereich ist hier beispielshaft auf den Bereich zwischen zwei Beleuchtungsgrenzen A und A' begrenzt, während der von Leuchtquelle 103‴ beleuchtete Bereich beispielshaft auf den Bereich zwischen Beleuchtungsgrenzen B und B' begrenzt ist. Dadurch, dass sich die zur Verfügung gestellte Lichtintensität auf ein größeres räumliches Feld verteilt, nimmt die Tiefenausleuchtung auf Kosten der Beleuchtungsfeldgröße ab. So kann zwar mit der Leuchtquelle 103' ein großes räumliches Feld senkrecht zur Lichtausbreitungsrichtung im Nahfeld N beleuchtet werden, die Lichtintensität reicht jedoch nicht mehr zur Ausleuchtung des Tiefenbereichs im Fernfeld F, um eine Objekterkennung durchführen zu können. Im Gegenzug ist zwar mit der Leuchtquelle 103‴ das Ausleuchtung des Tiefenbereichs im Fernfeld F möglich, jedoch ist der beleuchtete Bereich im Nahfeld N kleiner als bei Leuchtquelle 103', so dass ein nahes Objekt vielleicht nicht vollständig erfasst werden kann. Die Leuchtquellen 103' und 103ʺʺ können bei mittleren Distanzen eingesetzt werden, um eine erhöhte Ausleuchtung zu erreichen.

Alternativ kann zumindest eine der Leuchtquellen 103", 103ʺʺ auch dazu verwendet werden, den Bereich oder einen Teilbereich außerhalb des Beleuchtungsbereichs der Lichtquelle 103‴ in Fernfeld F zu beleuchten. Durch die Verwendung mehrerer Leuchtquellen kann man somit eine jeweils benötigte räumliche Ausleuchtung additiv aus mehreren Leuchtquellen zusammensetzen.

Es ist selbstverständlich, dass eine Lichtausbreitung stets im dreidimensionalen Raum stattfindet, und nicht, wie hier beispielhaft gezeigt, in einer zweidimensionalen Ebene.

Auch wenn die Anordnung der Leuchtquellen 103' bis 103ʺʺ in den Figuren 7a und 7b in einer planen Ebene und einem regelmäßigen Muster dargestellt ist, kann auch eine gekrümmte oder anderweitig geformte Fläche zur Aufnahme der Leuchtquellen 103' bis 103ʺʺ vorgesehen sein. Dadurch kann die Richtung der Lichtausstrahlung und der Abstand der jeweiligen Leuchtquelle 103' bis 103ʺʺ zu dem jeweiligen optischen Element 105' bis 105ʺʺ voreingestellt werden. Auch die Anzahl der Leuchtquellen kann erhöht oder erniedrigt werden, je nachdem, wie der auszuleuchtende Bereich und der vorhandene Bauraum beschaffen sind. Die optischen Elemente 105' bis 105ʺʺ des Optiksystems 104 können auch auf einer gekrümmten oder anderweitig geformten Fläche angeordnet sein, um den zu beleuchtenden Bereich optimal ausleuchten zu können.

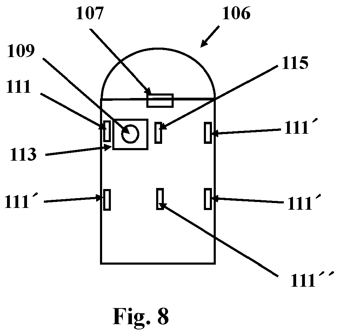

In Figur 8 sind beispielhaft Positionen dargestellt, an denen entsprechende Leuchteinheiten innerhalb eines Kraftfahrzeugs 106 angeordnet werden können, um eine bestmögliche Ausleuchtung zu erreichen.

In dem Kraftfahrzeug 106 ist ein TOF-Sensor 107 in eine Rückblickeinrichtung in Form eines Innenspiegels integriert. Der Sensor 107 kann jedoch auch an anderen Positionen, wie dem Armaturenbrett angeordnet sein, die Positionierung in Figur 8 ist also lediglich beispielhaft.

In dem Kraftfahrzeug 106 sind mehrere Leuchteinheiten angeordnet. Um eine bestmögliche, insbesondere teilweise seitliche, Ausleuchtung eines Kraftfahrzeuginsassen 109 für den Sensor 107 zu erreichen, ist eine Leuchteinheiten in den Kraftfahrzeuginsassensitz 113 integriert. Ergänzend oder alternative kann zum Beispiel vorgesehen sein, dass ein Leuchteinheit, wie in Fig. 8 gezeigt, in einem Haltegriff 111 zum Beispiel über der Fahrertür angebracht sein. Eine derartige Leuchteinheit kann alternativ oder ergänzend auch in weiteren Haltegriffen 111' auf der Beifahrerseite oder im Fond vorgesehen sein. Außerdem kann es vorgesehen sein, zusätzliche Haltegriffe 111" in einem Fahrzeuginnenraum zu installieren, um Fahrzeuginsassen in einem zumindest teilweise autonomen Kraftfahrzeug die Bewegung und/oder Sicherung zu erleichtern, die dann natürlich auch mit entsprechenden Leuchteinheiten versehen werden können.

Ferner kann zumindest eine Leuchteinheit am Dachhimmel, beispielsweise dem Dachhimmelbereich 115 angeordnet sein. Dies ermöglicht eine gute Ausleuchtung des Kraftfahrzeuginsassen 109 auch von oben. Durch diese Positionierung ist es auch möglich, den zentralen Bereich des Kraftfahrzeuginnenraums besonders gut auszuleuchten. Vorteilhafterweise ist die Leuchteinheit innerhalb eines kuppelförmigen Gehäuses untergebracht, von wo aus die Leuchteinheit bis zu 360 ° in einer vertikalen und bis zu 180 ° in einer horizontalen Ebene ausleuchten kann. Dies kann über mehrere fest installierte Leuchteinheit passieren, oder die installierte Leuchteinheit kann eine Bewegung ausführen, um die Richtung der Lichtausbreitung zu verändern.

Weitere geeignete Positionen für Leuchteinheiten sind Teile der A-Säule, der B-Säule und/oder der C-Säule, Bereiche von Türkomponenten, wie Türen, Türrahmen, Fenster, Fensterrahmen und/oder entsprechenden Abdeckungen, insbesondere Verkleidungen.

Die in dieser Beschreibung, den Ansprüchen und den Figuren offenbarten Merkmale bilden die Grundlage für die beanspruchte Erfindung, sowohl einzeln als auch in beliebigen Kombinationen miteinander, für die jeweiligen unterschiedlichen Ausführungsformen.

### Bezugszeichenliste

- 1: Rückblickvorrichtung
- 3: Eye-Tracking-Sensor
- 5: Erfassungsbereich
- 7: TOF-Sensor
- 9: Erfassungsbereich
- 11: Schritt
- 13: Schritt
- 15: Schritt
- 17: Schritt
- 19: Kopf
- 21: Oberkörper
- 23: Steuer
- 25: Auge
- 102: Leuchteinheit
- 103, 103', 103", 103‴, 103ʺʺ: Leuchtquelle
- 104: Optiksystem
- 105, 105', 105", 105"', 105ʺʺ: Optisches Element
- 106: Kraftfahrzeug
- 107: Sensor
- 109: Kraftfahrzeuginsasse
- 111, 111', 111": Haltegriff
- 113: Kraftfahrzeuginsassensitz
- 115: Dachhimmelbereich
- A, A', B, B': Beleuchtungsgrenzen
- N: Nahfeld
- F: Fernfeld

## Patentansprüche

1. Verfahren zum Beeinflussen zumindest eines Fahrassistenzsystems eines Kraftfahrzeugs (106), umfassend die Schritte:
• Empfangen (11) zumindest eines zumindest ein Aufmerksamkeitsmerkmal zumindest eines Kraftfahrzeuginsassen (109) repräsentierenden Signalwertes von zumindest einem Sensor (3, 7, 107);
• Ermitteln (13), anhand des Signalwertes, zumindest eines Aufmerksamkeitszustands des Kraftfahrzeuginsassen (109);
• Feststellen (15), ob der Aufmerksamkeitszustand des Kraftfahrzeuginsassen einem ersten Aufmerksamkeitszustand entspricht; und
• in Reaktion auf das Feststellen, dass der Aufmerksamkeitszustand dem ersten Aufmerksamkeitszustand entspricht, Beeinflussen (17) des Fahrassistenzsystems in einer ersten Weise,
**dadurch gekennzeichnet, dass**
zumindest ein Sensor (3, 7, 107) in Form eines Time-Of-Flight (TOF) Sensors (7) vorgesehen ist, der als Kamera ausgebildet ist und selber über eine eigene Leuchteinheit (102) verfügt, um den Bereich vor der Kamera aktiv zu beleuchten, und eine zusätzliche, also von dem zumindest einen Sensor (3, 7, 107) bzw. dem Detektionselement des zumindest einen Sensors (3, 7, 107) getrennt ausgebildete und beabstandet angeordnete Leuchteinheit (102) zur verbesserten Ausleuchtung des Tiefenbereichs vorgesehen ist, und durch eine entsprechende Distanzmessung des TOF-Sensors (7) Körper- und Kopfdrehungen erkannt und ausgewertet werden,
wobei die Ausleuchtung von den verschiedenen Bereichen im Innenraum des Kraftfahrzeugs (106) derart durchgeführt wird, dass die Ausleuchtung an den Zustand des Kraftfahrzeuginsassen (109) angepasst wird.

2. Verfahren nach Anspruch 1, **dadurch gekennzeichnet, dass**
die zusätzliche Leuchteinheit (10) elektromagnetische Strahlung außerhalb des für den Kraftfahrzeuginsassen (109) sichtbaren Bereichs, wie im Infrarotbereich, emittiert; und/oder
so dass der bzw. die Signalwerte zumindest das Aufmerksamkeitsmerkmal betreffend
(i) zumindest ein Ergebnis einer Auswertung einer durch zumindest einen ersten Sensor (3, 7, 107) festgestellten Zeitdauer, die der Kraftfahrzeuginsasse (109) mit seinen Augen nicht am Straßenverkehr teilnimmt,
(ii) zumindest ein Ergebnis einer Auswertung einer durch zumindest einen zweiten Sensor (3, 7, 107) festgestellte Blickrichtung des Kraftfahrzeuginsassen (109),
(iii) zumindest ein Ergebnis einer Auswertung einer durch zumindest einen dritten Sensor (3, 7, 107) festgestellten Position zumindest eines Augenlids des Kraftfahrzeuginsassen (109),
(iv) zumindest ein Ergebnis einer Auswertung einer durch zumindest einen vierten Sensor (3, 7, 107) festgestellte Zeitdauer, während der der Kraftfahrzeuginsasse (109) aufgrund seiner Kopfhaltung nicht am Straßenverkehr teilnimmt und/oder während der die Kopfhaltung einer verdrehten Kopfhaltung entspricht,
(v) zumindest ein Ergebnis einer Auswertung einer durch zumindest einen fünften Sensor (3, 7, 107) festgestellten Kopfhaltung,
(vi) zumindest ein Ergebnis einer Auswertung einer durch zumindest einen sechsten Sensor (3, 7, 107) festgestellten Zeitdauer, während der der Kraftfahrzeuginsasse (109) aufgrund seiner Körperhaltung nicht am Straßenverkehr teilnimmt und/oder während der die Körperhaltung einer gebeugten Körperhaltung entspricht, und/oder
(vii) zumindest ein Ergebnis einer Auswertung einer durch zumindest einen siebenten Sensor (3, 7, 107) festgestellten Körperhaltung und/oder einer gebeugten Körperhaltung,
repräsentiert und/oder repräsentieren.

3. Verfahren nach Anspruch 1 oder 2, **dadurch gekennzeichnet, dass** die Ausleuchtung von den verschiedenen Bereichen im Innenraum des Kraftfahrzeugs derart durchgeführt wird, dass die Ausleuchtung an den Zustand des Kraftfahrzeugs und/oder der Umgebung des Kraftfahrzeugs und/oder der Entfernung des Kraftfahrzeuginsassen zu der Kamera und/oder zu dem Sensor angepasst wird.

4. Verfahren nach einem der vorangehenden Ansprüche, ferner umfassend den Schritt:
in Reaktion auf das Feststellen (15), dass der Aufmerksamkeitszustand nicht dem ersten Aufmerksamkeitszustand entspricht, Beeinflussen (17) des Fahrassistenzsystems in einer zweiten Weise.

5. Verfahren nach einem der vorangehenden Ansprüche, **dadurch gekennzeichnet, dass**
(i) über den zumindest einen ersten Sensor (3, 7, 107) feststellt wird, ob der Kraftfahrzeuginsasse (109) seine Augen geschlossen und/oder die Blickrichtung des Kraftfahrzeuginsassen (109) einer Richtung abweichend von der Fahrtrichtung des Kraftfahrzeugs (106) entspricht,
(ii) über den zumindest einen dritten Sensor (3, 7, 107) festgestellt wird, ob eine die Augen geschlossene, eine die Augen halb geöffnete und/oder eine die Augen geöffnete Position des Augenlids des Kraftfahrzeuginsassen (109) vorliegt,
(iii) zumindest ein Ergebnis einer Auswertung einer durch zumindest einen achten Sensor (3, 7, 107) festgestellten Umgebungssituation im Seiten-, Rück- und/oder Frontbereich des Kraftfahrzeugs (106) bei der Bestimmung des Aufmerksamkeitsmerkmals berücksichtig wird,
(iv) zumindest ein Ergebnis einer Auswertung einer durch zumindest einen neunten Sensors (3, 7, 107) festgestellten Anzahl an Mitinsassen im Kraftfahrzeug (106) bei der Bestimmung des Aufmerksamkeitsmerkmals berücksichtig wird, und/oder
(v) zumindest ein Ergebnis einer Auswertung einer durch zumindest einen zehnten Sensor (3, 7, 107) festgestellten Anzahl und/oder Art der in dem Kraftfahrzeug (106) aktivierten weiteren Fahrassistenzsysteme bei der Bestimmung des Aufmerksamkeitsmerkmals berücksichtig wird.

6. Vorrichtung zum Beeinflussen zumindest eines Fahrassistenzsystems eines Kraftfahrzeugs (106), umfassend zumindest eine Prozessoreinheit, die dazu eingerichtet ist, die Schritte des Verfahrens nach einem der Ansprüche 1 bis 5 auszuführen.

7. System zum Beeinflussen zumindest eines Fahrassistenzsystems eines Kraftfahrzeugs (106), umfassend mindestens eine Vorrichtung nach Anspruch 6, zumindest einen Sensor (3, 7, 107) in Form eines Time-Of-Flight (TOF) Sensors (7), der als Kamera ausgebildet ist und selber über eine eigene Leuchteinheit (102) verfügt, um den Bereich vor der Kamera aktiv zu beleuchten, und eine zusätzliche, also von dem zumindest einen Sensor (3, 7, 107) bzw. dem Detektionselement des zumindest einen Sensors (3, 7, 107) getrennt ausgebildete und beabstandet angeordnete Leuchteinheit (102) zur verbesserten Ausleuchtung des Tiefenbereichs.

8. System nach Anspruch 7, umfassend mindestens einen zusätzlichen Sensor, wobei der mindestens eine zusätzliche Sensor (3, 7, 107) einen Eye-Tracking-Sensor (3), einen Body-Tracking-Sensor, einen Radar-Sensor, zumindest einen Lidar-Sensor und/oder zumindest ein Surroundviewsystem umfasst.

9. Kraftfahrzeug (106), umfassend zumindest eine Vorrichtung nach Anspruch 6.

10. Kraftfahrzeug (106), umfassend zumindest ein System nach Anspruch 7 oder 8.

## Claims

1. A method for influencing at least one driver assistance system of a motor vehicle (106), comprising the steps of:
• receiving (11) at least one signal value representing at least one attention characteristic of at least one motor vehicle occupant (109) from at least one sensor (3, 7, 107);
• ascertaining (13), based on the signal value, at least one attention state of the motor vehicle occupant (109);
• determining (15) whether the attention state of the motor vehicle occupant corresponds to a first attention state; and
• in response to determining that the attention state corresponds to the first attention state, influencing (17) the driver assistance system in a first manner,
**characterized in that**
at least one sensor (3, 7, 107) is provided in the form of a time-of-flight (TOF) sensor (7), which is designed as a camera and has its own lighting unit (102) in order to actively illuminate the region in front of the camera, and an additional lighting unit (102), which is designed to be separate from the at least one sensor (3, 7, 107) or the detection element of the at least one sensor (3, 7, 107) and is arranged at a distance therefrom, is provided for improved illumination of the depth region, and rotations of the body and head are identified and evaluated by a corresponding distance measurement of the TOF sensor (7),
wherein the illumination of different regions in the interior of the motor vehicle (106) being carried out such that the illumination is adapted to the state of the motor vehicle occupant (109).

2. The method according to Claim 1, **characterized in that**
the additional lighting unit (10) emits electromagnetic radiation outside the range visible to the motor vehicle occupant (109), such as in the infrared range; and/or
such that the signal value(s) represent(s) at least the attention characteristic relating to
(i) at least one result of an evaluation of a time for which the motor vehicle occupant (109) has not been participating in the road traffic with his eyes, this being determined by at least one first sensor (3, 7, 107),
(ii) at least one result of an evaluation of a viewing direction of the motor vehicle occupant (109) determined by at least one second sensor (3, 7, 107),
(iii) at least one result of an evaluation of a position of at least one eyelid of the motor vehicle occupant (109) determined by at least one third sensor (3, 7, 107),
(iv) at least one result of an evaluation of a time during which the motor vehicle occupant (109) has not been participating in the road traffic owing to his head position and/or during which his head position corresponds to a turned head position, this being determined by at least one fourth sensor (3, 7, 107),
(v) at least one result of an evaluation of a head position determined by at least one fifth sensor (3, 7, 107),
(vi) at least one result of an evaluation of a time during which the motor vehicle occupant (109) has not been participating in the road traffic owing to his body position and/or during which his body position corresponds to a bent-over body position, this being determined by at least one sixth sensor (3, 7, 107), and/or
(vii) at least one result of an evaluation of a body position determined by at least one seventh sensor (3, 7, 107) and/or a bent-over body position.

3. The method according to Claim 1 or 2, **characterized in that**
the illumination of different regions in the interior of the motor vehicle is carried out such that the illumination is adapted to the state of the motor vehicle and/or to the surroundings of the motor vehicle and/or to the distance between the motor vehicle occupant and the camera and/or the sensor.

4. The method according to any one of the preceding claims, further comprising the step of:
in response to determining (15) that the attention state does not correspond to the first attention state, influencing (17) the driver assistance system in a second manner.

5. The method according to any one of the preceding claims, **characterized in that**
(i) the at least one first sensor (3, 7, 107) determines whether the motor vehicle occupant (109) has closed his eyes and/or the line of sight of the motor vehicle occupant (109) corresponds to a direction deviating from the travel direction of the motor vehicle (106),
(ii) the at least one third sensor (3, 7, 107) determines whether the eyelids of the motor vehicle occupant (109) are in a position in which his eyes are closed, a position in which his eyes are half-closed, and/or a position in which his eyes are open,
(iii) at least one result of an evaluation of a situation in the environment in the side, rear and/or front region of the motor vehicle (106), this being determined by at least one eighth sensor (3, 7, 107), is taken into account when determining the attention characteristic,
(iv) at least one result of an evaluation of a number of passengers in the motor vehicle (106), this being determined by at least one ninth sensor (3, 7, 107), is taken into account when determining the attention characteristic, and/or
(v) at least one result of an evaluation of a number and/or type of the further driver assistance systems activated in the motor vehicle (106), this being determined by at least one tenth sensor (3, 7, 107), is taken into account when determining the attention characteristic.

6. A device for influencing at least one driver assistance system of a motor vehicle (106), comprising at least one processor unit, which is configured to carry out the steps of the method according to any one of Claims 1 to 5.

7. A system for influencing at least one driver assistance system of a motor vehicle (106), comprising at least one device according to Claim 6, at least one sensor (3, 7, 107) in the form of a time-of-flight (TOF) sensor (7), which is designed as a camera and has its own lighting unit (102) in order to actively illuminate the region in front of the camera, and an additional lighting unit (102), which is designed to be separate from the at least one sensor (3, 7, 107) or the detection element of the at least one sensor (3, 7, 107) and is arranged at a distance therefrom, for improved illumination of the depth region.

8. The system according to Claim 7, comprising at least one additional sensor, wherein the at least one additional sensor (3, 7, 107) comprises an eye-tracking sensor (3), a body-tracking sensor, a radar sensor, at least one LiDAR sensor and/or at least one surround view system.

9. A motor vehicle (106) comprising at least one device according to Claim 6.

10. A motor vehicle (106) comprising at least one system according to Claim 7 or 8.

## Revendications

1. Procédé destiné à influencer au moins un système d'aide à la conduite d'un véhicule automobile (106), comprenant les étapes :
• recevoir (11), en provenance d'au moins un capteur (3, 7, 107), au moins une valeur de signal représentant au moins une caractéristique d'attention d'au moins un occupant de véhicule automobile (109) ;
• déterminer (13), à l'aide de la valeur de signal, au moins un état d'attention de l'occupant de véhicule automobile (109) ;
• constater (15) si l'état d'attention de l'occupant de véhicule automobile correspond à un premier état d'attention ; et
• en réaction au constat que l'état d'attention correspond au premier état d'attention, influencer (17) le système d'aide à la conduite d'une première manière,
**caractérisé en ce qu'**
au moins un capteur (3, 7, 107) sous la forme d'un capteur de temps de vol, TOF - *Time-Of-Flight,* (7) est prévu, lequel est conçu sous la forme d'une caméra et dispose de sa propre unité lumineuse (102) pour éclairer de manière active la zone devant la caméra, et une unité lumineuse supplémentaire (102) est prévue, laquelle est conçue de manière séparée et disposée à distance de l'au moins un capteur (3, 7, 107) respectivement de l'élément de détection de l'au moins un capteur (3, 7, 107), afin d'améliorer l'éclairage de la zone en profondeur et une mesure de distance correspondante du capteur TOF (7) permet de distinguer et d'évaluer des rotations de corps et de tête,
dans lequel l'éclairage des différentes zones à l'intérieur du véhicule automobile (106) est réalisé de telle sorte que l'éclairage soit adapté à l'état de l'occupant de véhicule automobile (109).

2. Procédé selon la revendication 1, **caractérisé en ce que**
l unité lumineuse supplémentaire (10) émet un rayonnement électromagnétique à l'extérieur de la zone visible pour l'occupant de véhicule automobile (109), tel que dans le domaine infrarouge ; et/ou
de telle sorte que la respectivement les valeur(s) de signal représente et/ou représentent au moins la caractéristique d'attention concernant
(i) au moins un résultat d'une évaluation d'une durée dans le temps constatée par au moins un premier capteur (3, 7, 107) pendant laquelle l'occupant de véhicule automobile (109) ne participe pas avec ses yeux à la circulation routière,
(ii) au moins un résultat d'une évaluation d'une direction du regard de l'occupant de véhicule automobile (109) qui est constatée par l'intermédiaire d'au moins un deuxième capteur (3, 7, 107),
(iii) au moins un résultat d'une évaluation d'une position d'au moins une paupière de l'occupant de véhicule automobile (109) constatée par l'intermédiaire d'au moins un troisième capteur (3, 7, 107),
(iv) au moins un résultat d'une évaluation d'une durée dans le temps constatée par l'intermédiaire d'au moins un quatrième capteur (3, 7, 107), pendant laquelle l'occupant de véhicule automobile (109) ne participe pas à la circulation routière en raison de la position de sa tête et/ou pendant laquelle la position de tête correspond à une position de tête tournée,
(v) au moins un résultat d'une évaluation d'une position de tête constatée par l'intermédiaire d'au moins un cinquième capteur (3, 7, 107),
(vi) au moins un résultat d'une évaluation d'une durée dans le temps constatée par l'intermédiaire d'au moins un sixième capteur (3, 7, 107), pendant laquelle l'occupant de véhicule automobile (109) ne participe pas à la circulation routière en raison de la position de sa tête et/ou pendant laquelle la position corporelle correspond à une position corporelle penchée, et/ou
(vii) au moins un résultat d'une évaluation d'une position corporelle constatée par l'intermédiaire d'au moins un septième capteur (3, 7, 107) et/ou d'une position corporelle penchée.

3. Procédé selon la revendication 1 ou 2, **caractérisé en ce que** l'éclairage des différentes zones à l'intérieur du véhicule automobile est réalisé de telle sorte que l'éclairage soit adapté à l'état du véhicule automobile et/ou à l'environnement du véhicule automobile et/ou à l'éloignement de l'occupant de véhicule automobile par rapport à la caméra et/ou par rapport au capteur.

4. Procédé selon l'une quelconque des revendications précédentes, comprenant en outre l'étape :
en réaction au constat (15) que l'état d'attention ne correspond pas au premier état d'attention, influencer (17) le système d'aide à la conduite d'une seconde manière.

5. Procédé selon l'une quelconque des revendications précédentes, **caractérisé en ce que**
(i) l'au moins un premier capteur (3, 7, 107) permet de constater si l'occupant de véhicule automobile (109) a fermé les yeux et/ou si la direction du regard de l'occupant de véhicule automobile (109) correspond à une direction différente de la direction de déplacement du véhicule automobile (106),
(ii) l'au moins un troisième capteur (3, 7, 107) permet de constater si on est en présence d'une position des paupières de l'occupant de véhicule automobile (109) avec les yeux fermés, avec les yeux à moitié ouvert et/ou avec les yeux ouverts,
(iii) au moins un résultat d'une évaluation d'une situation d'environnement constatée par l'intermédiaire d'au moins un huitième capteur (3, 7, 107) dans la zone latérale, arrière et/ou avant du véhicule automobile (106) est pris en compte lors de la définition de la caractéristique d'attention,
(iv) au moins un résultat d'une évaluation d'un nombre d'occupants dans le véhicule automobile (106) constaté par l'intermédiaire d'au moins un neuvième capteur (3, 7, 107) est pris en compte lors de la définition de caractéristique d'attention, et/ou
(v) au moins un résultat d'une évaluation d'un nombre et/ou d'un type d'autres systèmes d'aide à la conduite activés dans le véhicule automobile (106) et constaté par l'intermédiaire d'au moins un dixième capteur (3, 7, 107) est pris en compte lors de la définition de caractéristique d'attention.

6. Dispositif destiné à influencer au moins un système d'aide à la conduite d'un véhicule automobile (106), comprenant au moins une unité de traitement qui est configurée pour réaliser les étapes du procédé selon l'une quelconque des revendications 1 à 5.

7. Système destiné à influencer au moins un système d'aide à la conduite d'un véhicule automobile (106), comprenant au moins un dispositif selon la revendication 6, au moins un capteur (3, 7, 107) sous la forme d'un capteur de temps de vol, TOF - *Time-Of-Flight,* (7), lequel est conçu sous la forme d'une caméra et dispose de sa propre unité lumineuse (102) pour éclairer de manière active la zone devant la caméra, et une unité lumineuse supplémentaire (102), laquelle est conçue de manière séparée et disposée à distance de l'au moins un capteur (3, 7, 107) respectivement de l'élément de détection de l'au moins un capteur (3, 7, 107) afin d'améliorer l'éclairage de la zone en profondeur.

8. Système selon la revendication 7, comprenant au moins un capteur supplémentaire, dans lequel l'au moins un capteur supplémentaire (3, 7, 107) comprend un capteur d'oculométrie (3), un capteur de position corporelle, un capteur radar, au moins un capteur lidar et/ou au moins un système de visualisation périphérique.

9. Véhicule automobile (106), comprenant au moins un dispositif selon la revendication 6.

10. Véhicule automobile (106), comprenant au moins un système selon la revendication 7 ou 8.
